# EUROPEAN PATENT APPLICATION

(11) **EP 4 837 791 A1**
(43) Date of publication of application: **11.11.2026**
(21) Application number: 26164965.1
(22) Date of filing: 16.03.2026
(51) Int. Cl.: B60R 21/232, B60R 21/237, B60R 21/2338

(54) **CURTAIN AIRBAG FOR VEHICLE**

(30) Priority: 07.05.2025 KR 20250058748
(71) Applicant: Hyundai Mobis Co., Ltd., Gangnam-gu Seoul 06141 (KR)
(72) Inventor: KANG, Dong Ho, 16891 Yongin-si, Gyeonggi-do (KR)
(74) Representative: Jung, Minkyu

(57) **Abstract**

A curtain airbag for a vehicle, including: a cushion body including a joint portion (110) configured to form an inflation region and a non-inflation region and an opening configured to supply gas to the inflation region; and a plurality of mounting tabs (200) provided along a roof side rail section of the vehicle at an upper end of the cushion body and configured to fix the cushion body to a vehicle body, wherein the joint portion (110) includes: a peripheral portion (111) joined along a periphery of the cushion body; a guide portion inside the peripheral portion configured to guide the gas to a front first inflation region, a central second inflation region, and a rear third inflation region; and a partition wall portion (113) configured to partition the third inflation region (A3) into a front first chamber (C1) and a rear second chamber (C2).

## Description

### CROSS-REFERENCE TO RELATED APPLICATIONS

This application claims the benefit of Korean Patent Application No. 10-2025-0058748, filed on May 07, 2025, in the Korean Intellectual Property Office, the entire disclosure of which is incorporated herein by reference in its entirety for all purposes.

### TECHNICAL FIELD

The present disclosure relates to a curtain airbag for a vehicle.

### BACKGROUND

In general, a vehicle is provided with various types of airbags for protecting an occupant in an event of an accident. Among them, a curtain airbag is mounted above a plurality of pillars disposed at sides of a front door and a rear door, respectively, and deploys downward in a lateral direction of the vehicle to protect the occupant when a vehicle rollover or side collision accident occurs.

As a size of a vehicle increases, a rear end portion of an airbag cushion corresponding to a third-row occupant is structured to further extend rearward in order to protect the third-row occupant. However, as a length of the airbag cushion increases, a problem may arise in that available assembling space within the vehicle body is insufficient. Such an assembling problem and interference with the vehicle body may cause unstable deployment of the rear end portion of the airbag cushion. As a result, it may be difficult to secure the safety of the third row-occupant. Accordingly, there is a need to improve these problems.

### SUMMARY

A technical object of the present disclosure is to provide a curtain airbag in which a rear side of a curtain airbag cushion is stably deployed, thereby improving occupant protection performance.

The problems to be solved by the present disclosure are not limited to those described above, and other problems not mentioned herein will be clearly understood by those having ordinary skill in the art from the following description.

A curtain airbag for a vehicle according to an embodiment of the present disclosure may include: a cushion body including a joint portion configured to form an inflation region and a non-inflation region and an opening configured to supply gas to the inflation region; and a plurality of mounting tabs provided along a roof side rail section of the vehicle at an upper end of the cushion body and configured to fix the cushion body to a vehicle body, wherein the joint portion may include: a peripheral portion joined along a periphery of the cushion body; a guide portion inside the peripheral portion configured to guide the gas to a front first inflation region, a central second inflation region, and a rear third inflation region; and a partition wall portion configured to partition the third inflation region into a front first chamber and a rear second chamber.

The cushion body may be roll-folded toward an upper end thereof and fixed to the vehicle body in a state in which the second chamber is folded along a folding line so as to overlap the first chamber, and
the mounting tabs may be omitted in a section including the second chamber at the upper end of the cushion body such that the cushion body is separated from the vehicle body.

The folding line may be located at a rear of the rearmost mounting tab among the plurality of mounting tabs and extends in a vertical direction.

The partition wall portion may extend downward from an upper peripheral portion located at the upper end of the cushion body toward a lower peripheral portion located at a lower end of the cushion body in the peripheral portion.

A passage through which the gas passes may be provided between a lower end of the partition wall portion and the lower peripheral portion, and wherein the partition wall portion may guide a gas flow in association with the passage such that the gas moves downward in the first chamber and, after passing through the passage, moves upward in the second chamber.

The partition wall portion may be located forward of the folding line and may be provided separately from the folding line.

The partition wall portion may be provided such that at least one point thereof meets the folding line.

The cushion body may be configured such that when inflated by the gas, the folded second chamber is unfolded and is deployed to a rear side of a D-pillar of the vehicle.

The curtain airbag may further include a strap configured to control a deployment shape of the second chamber when the folded second chamber is unfolded by the gas, wherein one end of the strap may be connected to the partition wall portion, and the other end of the strap may be connected to the non-inflation region at a rear end of the cushion body.

The strap may be provided on one side of either an inner panel facing a vehicle interior and an outer panel facing a vehicle body surface of the cushion body.

According to an embodiment of the present disclosure, a curtain airbag can be provided in which a rear side of the curtain airbag cushion is stably deployed, thereby improving occupant protection performance.

The effects of the present disclosure are not limited to those described above, and other effects not mentioned herein will be clearly understood by those having ordinary skill in the art from the following description.

### BRIEF DESCRIPTION OF THE DRAWINGS

FIG. 1 is a view illustrating a curtain airbag for a vehicle according to an embodiment of the present disclosure.
FIG. 2 is a view illustrating a third inflation region including a partition wall portion in the curtain airbag shown in FIG. 1.
FIGS. 3A and 3B are views illustrating another embodiment of a partition wall portion.
FIG. 4 is a view illustrating a curtain airbag for a vehicle according to another embodiment of the present disclosure.
FIG. 5 is a view illustrating a third inflation region including a strap in the curtain airbag shown in FIG. 4.
FIGS. 6A and 6B are views illustrating a location at which a strap is provided.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, the embodiments of the present disclosure will be described in detail with reference to the accompanying drawings. Like reference numerals refer to identical or corresponding elements throughout the drawings, and redundant description will be omitted.

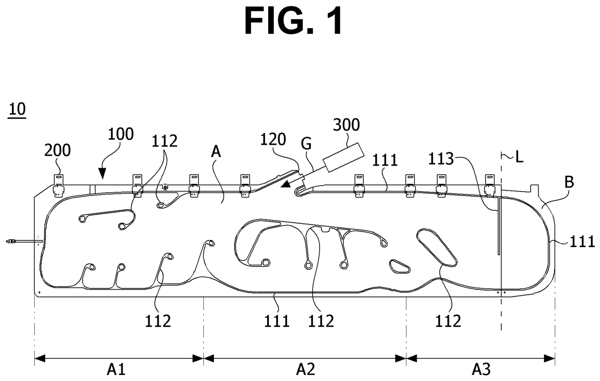

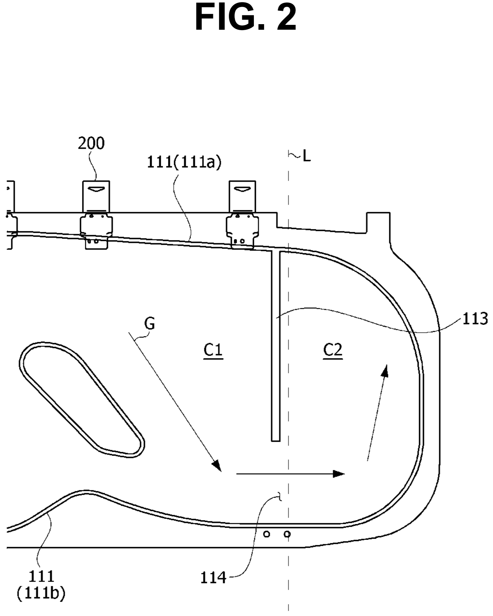

FIG. 1 is a view illustrating a curtain airbag for a vehicle according to an embodiment of the present disclosure, and FIG. 2 is a view illustrating a third inflation region including a partition wall portion in the curtain airbag shown in FIG. 1.

Referring to the drawings, a curtain airbag 10 according to an embodiment of the present disclosure may include a cushion body 100 and mounting tabs 200.

The cushion body 100 may be mounted to a vehicle body on an upper portion of a door of a vehicle. In an embodiment, the cushion body 100 may have substantially a rectangular shape extending in a longitudinal direction of the vehicle, and may be fixed, in a roll-folded state, to the vehicle body along a roof side rail of the vehicle via the mounting tabs 200.

A plurality of mounting tabs 200 may be provided at an upper end of the cushion body 100 along a roof side rail section of the vehicle. Here, the roof side rail section may correspond to a section from an A-pillar to a D-pillar. The mounting tabs 200 may fix the upper end of the cushion body 100 to the vehicle body.

The cushion body 100 may be formed by mutually joining an inner panel 101 and an outer panel 102 that are cut into a predetermined shape while facing each other in a flat state. The inner panel 101 faces a vehicle interior and the outer panel 102 faces the vehicle body. In an embodiment, the inner panel 101 and the outer panel 102 may be made of a flexible fabric, but the material is not limited thereto.

The cushion body 100 may include a joint portion 110 configured to form an inflation region A and a non-inflation region B and an opening 120 configured to supply gas to the inflation region. The opening 120 may be connected to an inflator 300 generating gas G.

The joint portion 110 may include a peripheral portion 111 joined along a periphery of the cushion body 100. An inner region enclosed by the peripheral portion 111 may correspond to the inflation region A that is inflated by the gas G and the outer region of the peripheral portion 111 may correspond to the non-inflation region B that is not inflated since the gas G is not injected therein.

The joint portion 110 may include a guide portion 112 inside the peripheral portion 111 configured to guide the gas G to a front first inflation region A1, a central second inflation region A2, and a rear third inflation region A3. The first inflation region A1 may be configured to overlap a head location of a first-row occupant, the second inflation region A2 may be configured to overlap a head location of a second-row occupant, and the third inflation region A3 may be configured to overlap a head location of a third-row occupant.

The guide portion 112 may extend inward from the peripheral portion 111 or may be disposed between the peripheral portion(s) 111 to partition the first inflation region A1, the second inflation region A2, and the third inflation region A3 into chambers having various shapes.

The joint portion 110 may include a partition wall portion 113 configured to partition the third inflation region A3 into a front first chamber C1 and a rear second chamber C2.

The partition wall portion 113 may extend downward from an upper peripheral portion 111a located at the upper end of the cushion body 100 toward a lower peripheral portion 111b located at a lower end of the cushion body 100 in the peripheral portion 111.

A passage 114 through which gas passes may be provided between a lower end of the partition wall portion 113 and the lower peripheral portion 111b. That is, the partition wall portion 113 is not connected to the lower peripheral portion 111b but is separated therefrom by a size of the passage 114.

The partition wall portion 113 is configured to guide a gas flow in association with the passage 114, such that the gas G moves downward in the first chamber C1, and after passing through the passage 114, moves upward in the second chamber C2. Accordingly, the gas G that is supplied to the third inflation region A3 through the second inflation region A2, moves downward along the partition wall portion 113 in the first chamber C1 and moves upward in the second chamber C2.

The cushion body 100 including the joint portion 110 is roll-folded toward the upper end thereof and fixed to the vehicle body in a state in which the second chamber C2 is folded along a folding line L so as to overlap the first chamber C1.

Specifically, in order to improve protection performance for a third-row occupant, it is necessary to sufficiently extend the third inflation region rearward. In this case, a length of the cushion body 100 becomes greater than that of the roof side rail section, and a portion of the third inflation region A3 is positioned to extend further rearward than the roof side rail section.

Accordingly, in order to mount the cushion body 100 to the roof side rail, it is necessary to forward-fold a protruding portion extending further rearward than the roof side rail section so as to match the length of the cushion body 100 to the roof side rail section.

In an embodiment of the present disclosure, the protruding portion corresponds to a section in which the second chamber C2 is folded in the third inflation region A3, and in a state in which the second chamber C2 is folded along the folding line L so as to overlap the first chamber C1, the cushion body 100 is roll-folded from the lower end thereof toward the upper end thereof.

Accordingly, the cushion body 100 is configured such that when inflated by the gas G, the folded second chamber C2 is unfolded rearward and deployed to a rear side of the D-pillar of the vehicle.

In an embodiment, the folding line L may be located at a rear of the rearmost mounting tab among the plurality of mounting tabs 200 and may extend in a vertical direction.

As illustrated in the drawings, the partition wall portion 113 may be located forward of the folding line L and may be provided separately from the folding line L. That is, the partition wall portion 113 may extend substantially parallel to the folding line L.

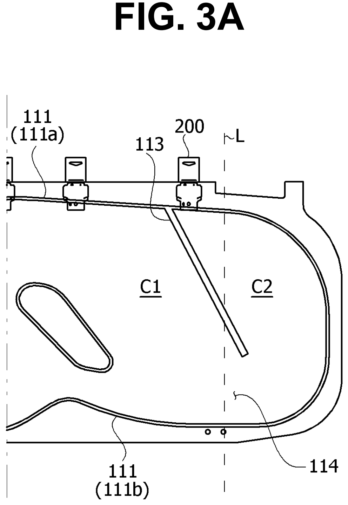

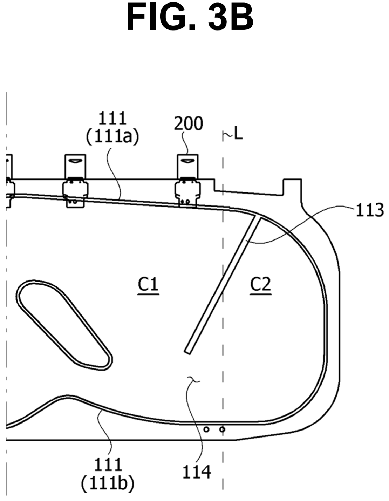

FIGS. 3A and 3B illustrate another embodiment of the partition wall portion 113. As illustrated in the drawings, the partition wall portion 113 may be provided such that at least one point thereof meets the folding line L. That is, the partition wall portion 113 may extend obliquely while crossing the folding line L.

In an embodiment, the mounting tabs 200 may not be provided at the upper end of the cushion body 100 that includes the second chamber C2. That is, in a section including the second chamber C2 at the upper end of the cushion body 100, the mounting tabs 200 may be omitted such that the cushion body 100 is not fixed to the vehicle body and is separated therefrom.

As such, the cushion body 100 is mounted to the vehicle body in a roll-folded state in which the rear end thereof is forward-folded by a length corresponding to a section of the second chamber C2, and when inflated by the gas G, the folded second chamber C2 is unfolded rearward and deployed to a rear side of the D-pillar of the vehicle. Through this, the head of the third-row occupant is protected by a structure in which the head is wrapped together with the first chamber C1 from the rear of the D-pillar. Accordingly, protection performance may be further improved.

In particular, by implementing a gas flow in which the gas G moves downward in the first chamber and then moves upward in the second chamber C2 by the partition wall portion 113, deployment performance of the second chamber C2 may be further improved. That is, as the cushion body 100 is outboard roll-folded from the lower end thereof toward the upper end thereof, the gas flow is moved as much as possible toward the lower end thereof, thereby increasing deployment speeds of the first chamber C1 and the second chamber C2.

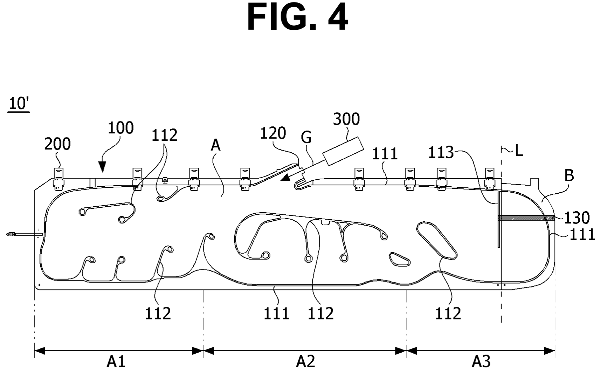

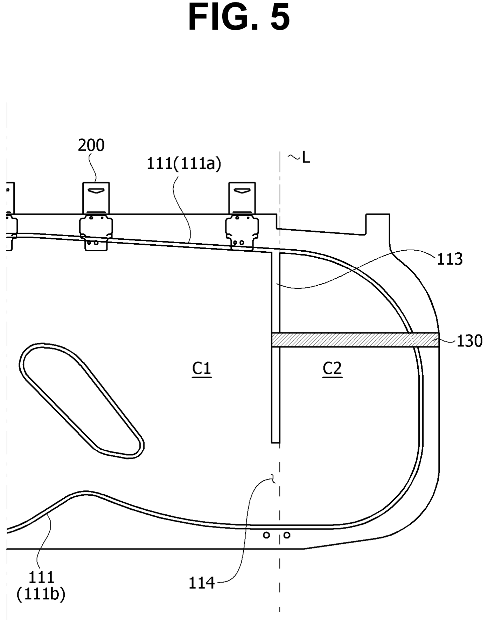

FIGS. 4 and 5 illustrate a curtain airbag 10' according to another embodiment of the present disclosure.

FIG. 4 is a view illustrating a curtain airbag for a vehicle according to another embodiment of the present disclosure, and FIG. 5 is a view illustrating a third inflation region including a strap in the curtain airbag shown in FIG. 4.

Referring to the drawings, the curtain airbag 10' may further include a strap 130.

The strap 130 may be configured to control a deployment shape of the second chamber C2 when the folded second chamber C2 is unfolded by gas G.

One end of the strap 130 may be connected to the partition wall portion 113, and the other end thereof may be connected to a non-inflation region B at a rear end of the cushion body 100.

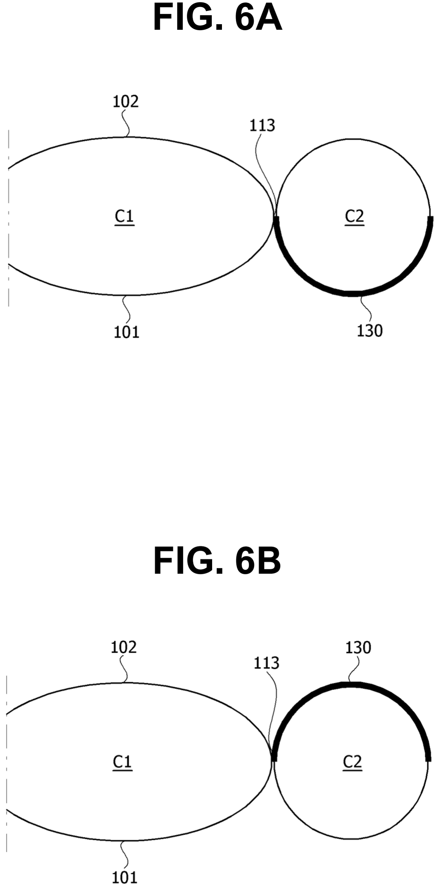

As illustrated in FIGS. 6A and 6B, the strap 130 may be provided on one side of either the inner panel 101 facing a vehicle interior and the outer panel 102 facing a vehicle body surface of the cushion body 100. That is, when it is necessary to control the second chamber C2 toward an inboard direction, the strap 130 may be provided on the inner panel 101, and when it is necessary to control the second chamber C2 toward an outboard direction, the strap 130 may be provided on the outer panel 102.

The strap 130 may adjust a deployment angle of the second chamber C2 through a length adjustment. For example, when a length of the strap 130 is reduced while being provided on the inner panel 101, the second chamber C2 may be deployed in a structure in which the second chamber C2 is bent toward the interior. Conversely, when the length of the strap 130 is increased, the second chamber C2 may be deployed in a structure in which a bending angle is reduced. For example, the second chamber C2 may be deployed parallel to the first chamber C1. Such a deployment shape of the second chamber C2 may be variously controlled to effectively protect a third-row occupant in correspondence with a shape and a structure of the vehicle via the strap 130.

In an embodiment, the strap 130 may be made of a flexible fabric material like the cushion body 100, but it is not limited thereto.

Despite the foregoing description with reference to the drawings, it will be understood by those having ordinary skill in the art that various modifications and alternations may be made without departing from the spirit or scope of the present disclosure. Furthermore, any variations arising from such modifications or alterations should be understood as intended to fall within the scope of the present disclosure as set forth in the appended claims.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A curtain airbag for a vehicle, comprising:
a cushion body including a joint portion configured to form an inflation region and a non-inflation region, and having an opening through which gas is supplied to the inflation region; and
a plurality of mounting tabs provided along a roof side rail section of the vehicle at an upper end of the cushion body and configured to fix the cushion body to a vehicle body,
wherein the joint portion includes:
a peripheral portion joined along a periphery of the cushion body;
a guide portion disposed inside the peripheral portion and configured to guide the gas to a front inflation region, a central inflation region, and a rear inflation region; and
a partition wall portion configured to partition the rear inflation region into a front chamber and a rear chamber.

2. The curtain airbag for a vehicle of claim 1, wherein:
the cushion body is configured to be roll-folded toward an upper end thereof and fixed to the vehicle body in a state in which the rear chamber is folded along a folding line so as to overlap the front chamber, and
the plurality of mounting tabs is configured to be omitted in a section including the rear chamber at the upper end of the cushion body such that the cushion body is separated from the vehicle body.

3. The curtain airbag for a vehicle of claim 2, wherein the folding line is located rearward of a rearmost one of the plurality of mounting tabs and extends in a vertical direction.

4. The curtain airbag for a vehicle of claim 2 or 3, wherein the partition wall portion extends downward from an upper peripheral portion located at the upper end of the cushion body toward a lower peripheral portion located at a lower end of the cushion body in the peripheral portion.

5. The curtain airbag for a vehicle of claim 4, wherein:
a passage through which the gas passes is provided between a lower end of the partition wall portion and the lower peripheral portion, and
the partition wall portion is configured to guide the gas in association with the passage such that the gas moves downward in the front chamber and, after passing through the passage, moves upward in the rear chamber.

6. The curtain airbag for a vehicle of any one of claims 2 to 5, wherein the partition wall portion is located forward of the folding line and is separated from the folding line.

7. The curtain airbag for a vehicle of any one of claims 2 to 5, wherein the partition wall portion is provided such that at least one point thereof meets the folding line.

8. The curtain airbag for a vehicle of any one of claims 2 to 7, wherein the cushion body is configured such that when inflated by the gas, the folded rear chamber is unfolded and deployed to a rear side of a D-pillar of the vehicle.

9. The curtain airbag for a vehicle of any one of claims 2 to 8, further comprising a strap configured to control a deployment shape of the rear chamber when the folded rear chamber is unfolded by the gas,
wherein the strap has a first end connected to the partition wall portion and a second end connected to the non-inflation region at a rear end portion of the cushion body.

10. The curtain airbag for a vehicle of claim 9, wherein the strap is provided on one side of either an inner panel facing a vehicle interior and an outer panel facing a vehicle body surface of the cushion body.
